# EUROPEAN PATENT APPLICATION

(11) **EP 4 178 072 A1**
(43) Date of publication of application: **10.05.2023**
(21) Application number: 22205737.4
(22) Date of filing: 07.11.2022
(51) Int. Cl.: H02J 7/00, H02J 1/10, B60L 53/24, H02M 7/797

(54) **POWER INTEGRATION SYSTEM WITH MOTOR DRIVE AND BATTERY CHARGING AND DISCHARGING FUNCTION**

(30) Priority: 08.11.2021 US 202163276866 P; 21.09.2022 TW 111135643
(71) Applicant: Delta Electronics Inc., Taoyuan City 320023 (TW)
(72) Inventor: LIAO, Chih-Chia, 320023 Taoyuan City (TW); LI, Cheng-Chung, 320023 Taoyuan City (TW); TSAI, Wen-Chieh, 320023 Taoyuan City (TW); CHENG, Hsieh-Hsiung, 320023 Taoyuan City (TW)
(74) Representative: 2K Patentanwälte Blasberg Kewitz & Reichel

(57) **Abstract**

A power integration system with motor drive and battery charging and discharging includes a motor (10), a power integration circuit (20), and a battery (30). The power integration circuit (20) includes an inverter (21) and a charger (22). The inverter (21) includes multi-phase bridge arms, and each bridge arm has an upper switch (Q₁, Q₃, Q₅) and a lower switch (Q₂, Q₄, Q₆). Each bridge arm is correspondingly coupled to each phase winding of the motor (10). The charger (22) includes a front-end DC conversion path (22A), and the upper switch (Q₁, Q₃, Q₅) and the lower switch (Q₂, Q₄, Q₆) of at least one bridge arm of the shared inverter (21). The battery (30) is coupled to the power integration circuit (20). The power integration circuit (20) receives a DC power provided by a DC power apparatus (40), and the charger (22) converts the DC power to charge the battery (30). The battery (30) provides the power required to drive the motor (10) by the inverter (21).

## Description

### BACKGROUND

### Technical Field

The present disclosure relates to a power integration system, and more particularly to a power integration system with motor drive and battery charging and discharging.

### Description of Related Art

The statements in this section merely provide background information related to the present disclosure and do not necessarily constitute prior art.

The current light electric vehicle system includes a motor driver and a charger, wherein the charger is divided into the on-board charger and the off-board charger. Since the chargers have different battery specifications, various manufacturers will introduce dedicated off-board chargers for users to use, and the disadvantage is that the chargers are not compatible with different vehicles, which makes it inconvenient to carry.

### SUMMARY

An objective of the present disclosure is to provide a power integration system with motor drive and battery charging and discharging function to solve the problems of existing technology.

In order to achieve the above-mentioned objective, the power integration system with motor drive and battery charging and discharging function includes a motor, a power integration circuit, and a battery. The power integration circuit includes an inverter and a charger. The inverter includes multi-phase bridge arms. Each bridge arm includes an upper switch and a lower switch, and each bridge is correspondingly coupled to each phase winding of the motor. The charger includes a front-end DC conversion path, and the upper switch and the lower switch of at least one bridge arm of the shared inverter. The battery is coupled to the power integration circuit. The power integration circuit receives a DC power provided by a DC power apparatus, and the charger converts the DC power to charge the battery, and the battery provides power required to drive the motor through the inverter.

In one embodiment, the battery provides power required by a power-receiving apparatus through the charger, or the power-receiving apparatus charges the battery through the charger.

In one embodiment, the front-end DC conversion path includes a front-end bridge arm and a first energy-storing inductor. The front-end bridge arm is coupled to the shared upper switch and lower switch. The first energy-storing inductor is coupled to the front-end bridge arm. The charger further includes a charging unit. The charging unit includes a second energy-storing inductor and a sub path. The second energy-storing inductor is coupled to the shared upper switch and lower switch. The sub path is coupled to the second energy-storing inductor.

In one embodiment, the front-end bridge arm includes a first switch and a second switch. A common-connected node of the first switch and the second switch is coupled to a first end of the first energy-storing inductor, and a second end of the first energy-storing inductor is coupled to the battery. The sub path includes a third switch. A first end of the third switch is coupled to an end, which is not commonly coupled to the upper switch, of the lower switch, and a second end of the third switch is coupled to the DC power apparatus.

In one embodiment, the front-end bridge arm includes a first switch and a second switch. A common-connected node of the first switch and the second switch is coupled to a first end of the first energy-storing inductor, and a second end of the first energy-storing inductor is coupled to the battery. The sub path includes a third switch. A first end of the third switch is coupled in series to the second energy-storing inductor, and a second end of the third switch is coupled to the DC power apparatus.

In one embodiment, the front-end bridge arm includes a first switch and a second switch. A common-connected node of the first switch and the second switch is coupled to a first end of the first energy-storing inductor, and a second end of the first energy-storing inductor is coupled to the battery. The sub path includes a first diode. An anode of the first diode is coupled to an end, which is not commonly coupled to the upper switch, of the lower switch, and a cathode of the first diode is coupled to the DC power apparatus.

In one embodiment, when a voltage of the battery is greater than a reference voltage value, the charging unit operates in a boost mode to charge the battery, and when the voltage of the battery is less than the reference voltage value, the charging unit operates in a buck mode to charge the battery.

In one embodiment, the battery provides power required by a power-receiving apparatus through the charger, or the power-receiving apparatus charges the battery through the charger, and according to the power required by the power-receiving apparatus, the charging unit makes the battery operate in a boost mode or a buck mode to discharge to the power-receiving apparatus.

In one embodiment, the front-end DC conversion path includes a front-end bridge arm and a first energy-storing inductor. The front-end bridge arm is coupled to the shared upper switch and lower switch. The first energy-storing inductor is coupled to the front-end bridge arm. The charger further includes a charging unit. The charging unit includes a plurality of second energy-storing inductors and a sub path. The second energy-storing inductors are correspondingly coupled to the shared upper switches and lower switches. The sub path is coupled to the second energy-storing inductors.

Accordingly, the power integration system with motor drive and battery charging and discharging function is provided to realize the structure that the power switches of a three-phase motor driver are shared in the charger, which can reduce the number of external components, thereby reducing the size and achieving high efficiency.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWINGS

The present disclosure can be more fully understood by reading the following detailed description of the embodiment, with reference made to the accompanying drawing as follows:
FIG. 1 is a block diagram of a power integration system with motor drive and battery charging and discharging function used with a DC power apparatus and a power-receiving apparatus according to the present disclosure.
FIG. 2 is a block diagram of the power integration system with motor drive and battery charging and discharging function used with the DC power apparatus according to the present disclosure.
FIG. 3 is a block circuit diagram of the power integration system with motor drive and battery charging and discharging function according to a first embodiment of the present disclosure.
FIG. 4 is a block circuit diagram of a charger in FIG. 3 according to a first embodiment of the present disclosure.
FIG. 5 is a block circuit diagram of the charger in FIG. 3 according to a second embodiment of the present disclosure.
FIG. 6 is a block circuit diagram of the charger in FIG. 3 according to a third embodiment of the present disclosure.
FIG. 7 is a block circuit diagram of the power integration system with motor drive and battery charging and discharging function according to a second embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

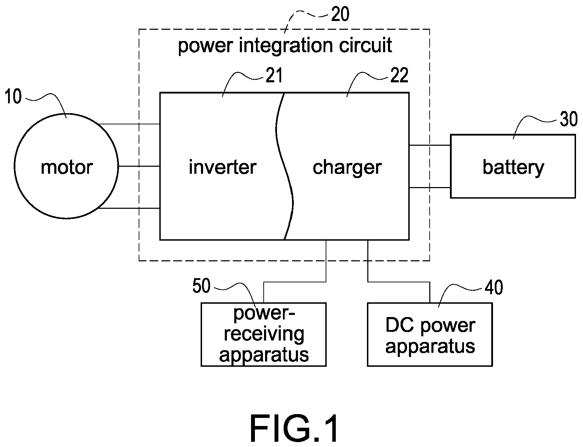

Due to the versatility of Type-C transmission cables and the convenience of USB-PD chargers, the present disclosure proposes an integrated (shared components) bidirectional charger structure as shown in FIG. 1, which combines the traditional three-phase motor driver and charger to form an integration system. The system can be directly connected to an external USB-PD through a Type-C transmission line for charging. In addition to the charging function, the battery energy can also be provided to external apparatuses (or power-receiving apparatuses) through Type-C transmission cables, such as but not limited to light electric vehicles (such as electric scooters, electric bicycles, electric wheelchairs, electric skateboards, etc.). Accordingly, the power integration system with motor drive and battery charging and discharging function is provided to realize the structure that the power switches of a three-phase motor driver are shared in the charger, which can reduce the number of external components, thereby reducing the size and achieving high efficiency.

Please refer to FIG. 1, which shows a block diagram of a power integration system with motor drive and battery charging and discharging function used with a DC power apparatus and a power-receiving apparatus according to the present disclosure. The power integration system with motor drive and battery charging and discharging function (hereinafter referred to as the power integration system) includes a motor 10, a power integration circuit 20, and a battery 30. The power integration circuit 20 includes an inverter 21 and a charger 22. The inverter 21 has multi-phase (for example, three-phase) bridge arms, each phase bridge arm includes an upper switch and a lower switch, and each phase bridge arm is correspondingly coupled to each phase winding of the motor 10. The charger 22 includes a front-end DC conversion path 22A and the upper switch and the lower switch of at least one bridge arm of the shared inverter 21. In other words, the power integration circuit 20 is a shared-component circuit structure having the inverter 21 and the charger 22. Specifically, the part of the shared component is the upper switch and the lower switch of the at least one bridge arm, and the front-end DC conversion path 22A, which will be described in detail later. Incidentally, the front-end DC conversion path 22A of the present disclosure can be, for example but not limited to, a boost converter, a buck converter, a buck-boost converter, or other types of DC-DC converters, which can be designed according to the requirements of practical applications. The battery 30 is coupled to the power integration circuit 20.

The power integration system shown in FIG. 1 is a bidirectional structure. Therefore, the power integration circuit 20 receives DC power provided by a DC power apparatus 40, and the charger 22 of the power integration circuit 20 converts the DC power to charge the battery 30 so that the DC power can charge the battery 30. In one embodiment, the DC power apparatus 40 is, for example, but not limited to, USB-PD. Take the light electric vehicle - electric bicycle as an example, the motor 10, the power integration circuit 20, and the battery 30 are installed (disposed) inside the electric bicycle, and the DC power provided by the DC power apparatus 40 is an external USB-PD DC power. Therefore, when the electric bicycle is plugged into the USB-PD DC power for charging, the charger 22 of the power integration circuit 20 converts the USB-PD DC power to charge the battery 30 installed inside the vehicle body of the electric bicycle.

Moreover, the battery 30 provides power required by a power-receiving apparatus 50 through the charger 22. As mentioned above, the power-receiving apparatus 50 is, for example, but not limited to, a portable mobile apparatus (such as a mobile phone, a tablet computer, a notebook computer, etc.). When the user is outdoors, the user can plug a mobile phone, a power bank, or an electric bicycle (i.e., the power-receiving apparatus 50) into the charger 22 of the power integration circuit 20 installed inside another electric bicycle for charging, the battery 30 supplies (provides) the power required by the mobile phone through the charger 22 to charge the mobile phone, the power bank, or the electric bicycle.

Moreover, the battery 30 provides power required to drive the motor 10 through the inverter 21. When the user rides the electric bicycle outdoors, the power required to drive the motor 10 is supplied by the battery 30.

Moreover, the power-receiving apparatus 50 charges the battery 30 through the charger 22. When the electric bicycle is not in the riding state and no DC power (the USB-PD DC power) provided by the DC power apparatus 40 charges the battery 30, the battery 30 is charged by the power provided from the power-receiving apparatus 50 (i.e., the mobile phone, the power bank, or the electric bicycle). For example, when the user rides the electric bicycle outdoors and the battery 30 cannot provide the power required by the electric bicycle, the battery 30 can be charged by the power provided from the power-receiving apparatus 50 so that the electric bicycle can be ridden in a short time to the nearest place with the DC power apparatus 40 to be fully charged.

Therefore, the power integration system shown in FIG. 1 provides a bidirectional power path, including that the DC power apparatus 40 charges the battery 30 or the power-receiving apparatus 50 charging the battery 30, and the battery 30 supplies power to the power-receiving apparatus 50 or the battery 30 supplies power to the motor.

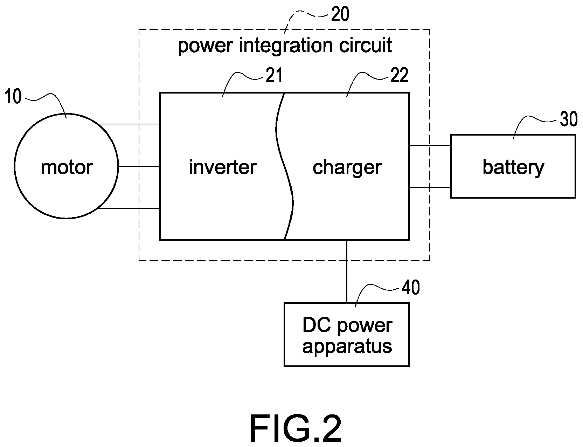

Please refer to FIG. 2, which shows a block diagram of the power integration system with motor drive and battery charging and discharging function used with the DC power apparatus according to the present disclosure. The major difference between the embodiment shown in FIG. 2 and the embodiment shown in FIG. 1 is that the former does not have the power-receiving apparatus 50. In other words, the power integration system shown in FIG. 2 is applied (operated) without the power-receiving apparatus 50. Therefore, the power integration system shown in FIG. 2 provides a unidirectional power path, including the DC power apparatus 40 charging the battery 30, and the battery 30 supplying power to the motor 10. For other operations that are the same as those of the first embodiment shown in FIG. 1, refer to the foregoing description, and the detail description is omitted here for conciseness.

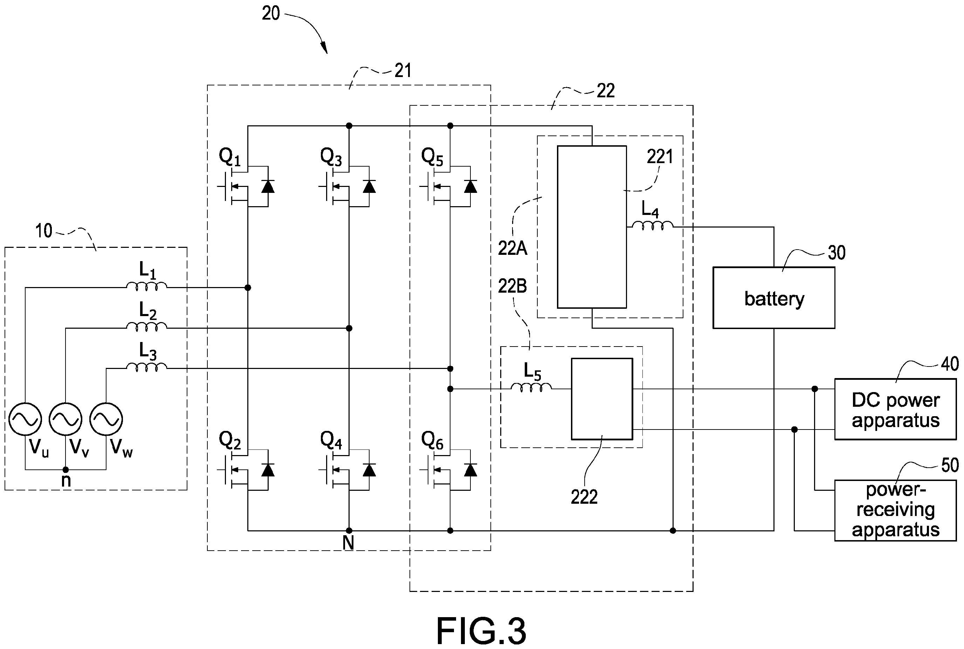

Please refer to FIG. 3, which shows a block circuit diagram of the power integration system with motor drive and battery charging and discharging function according to a first embodiment of the present disclosure. The front-end DC conversion path 22A includes a front-end bridge arm 221 and a first energy-storing inductor L₄. The front-end bridge arm 221 is coupled to the shared upper switch Qs and lower switch Q₆. The first energy-storing inductor L₄ is coupled to the front-end bridge arm 221. The charger 22 further includes a charging unit 22B. The charging unit 22B includes a second energy-storing inductor L₅ and a sub path 222.

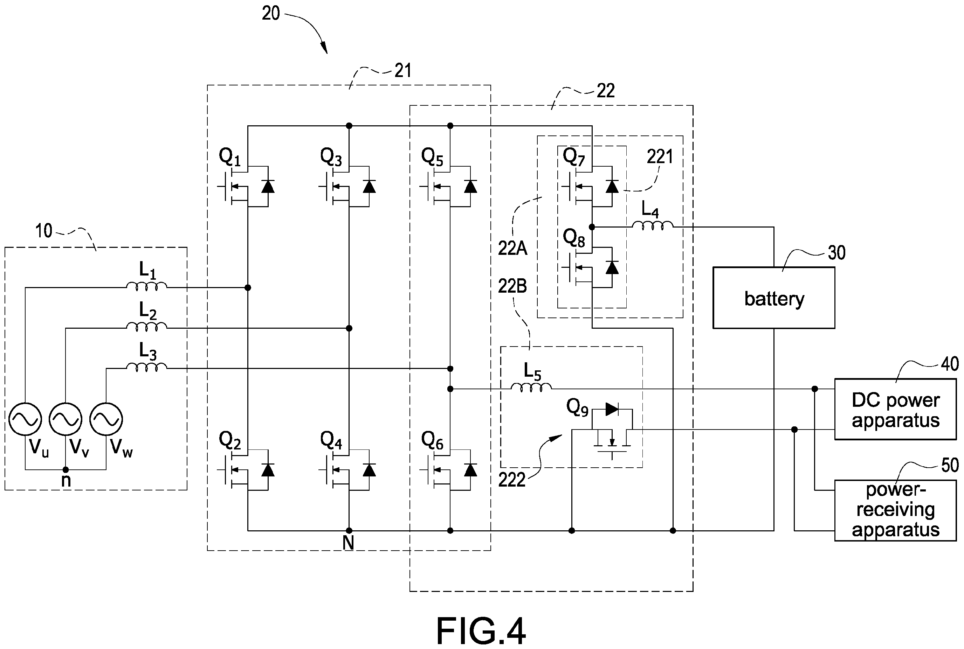

Please refer to FIG. 4, which shows a block circuit diagram of a charger in FIG. 3 according to a first embodiment of the present disclosure. The front-end bridge arm 221 includes a first switch Q₇ and a second switch Qs. A common-connected node of the first switch Q₇ and the second switch Q₈ is coupled to a first end of the first energy-storing inductor L₄, and a second end of the first energy-storing inductor L₄ is coupled to the battery 30. The sub path 222 includes a third switch Q₉. A first end of the third switch Q₉ is coupled to an end, which is not commonly coupled to the upper switch Q₅, of the lower switch Q₆, and a second end of the third switch Q₉ is coupled to the DC power apparatus 40.

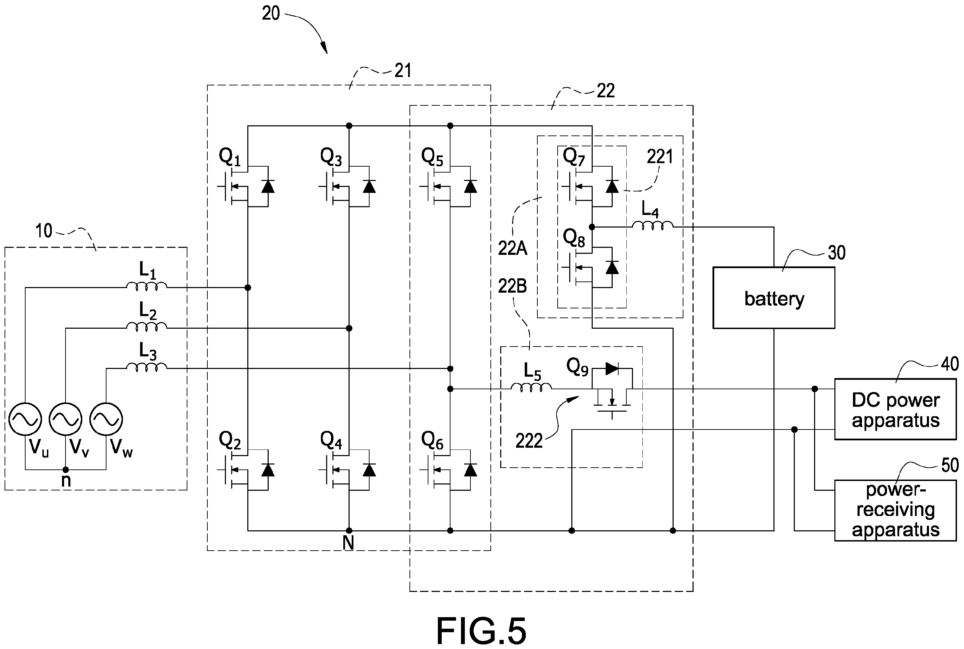

Please refer to FIG. 5, which shows a block circuit diagram of the charger in FIG. 3 according to a second embodiment of the present disclosure. The front-end bridge arm 221 includes a first switch Q₇ and a second switch Qs. A common-connected node of the first switch Q₇ and the second switch Q₈ is coupled to a first end of the first energy-storing inductor L₄, and a second end of the first energy-storing inductor L₄ is coupled to the battery 30. The sub path 222 includes a third switch Q₉. A first end of the third switch Q₉ is coupled in series to the second energy-storing inductor L₅, and a second end of the third switch Q₉ is coupled to the DC power apparatus 40.

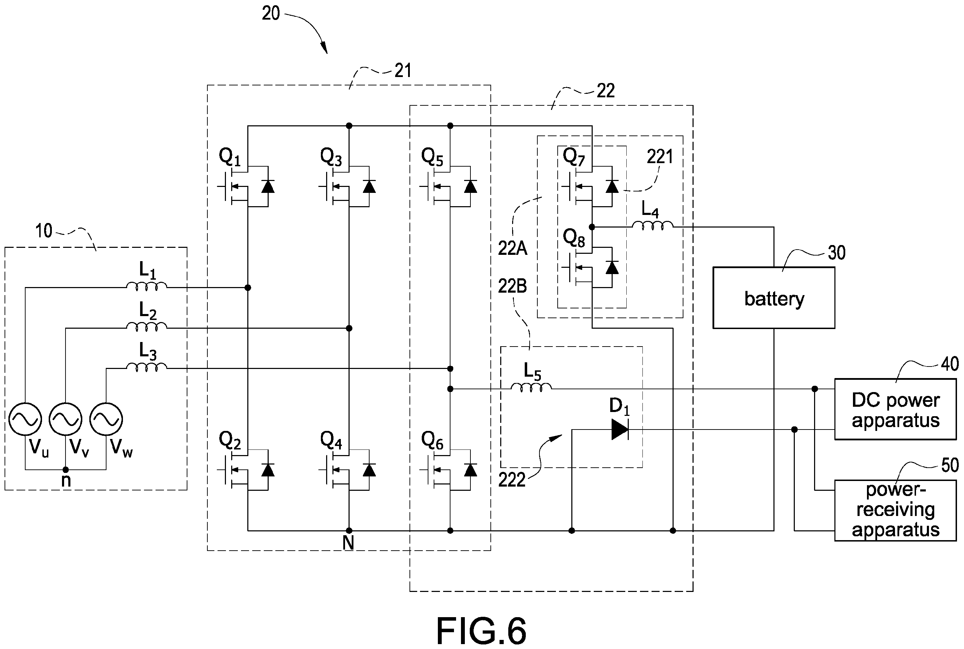

Please refer to FIG. 6, which shows a block circuit diagram of the charger in FIG. 3 according to a third embodiment of the present disclosure. The front-end bridge arm 221 includes a first switch Q₇ and a second switch Qs. A common-connected node of the first switch Q₇ and the second switch Q₈ is coupled to a first end of the first energy-storing inductor L₄, and a second end of the first energy-storing inductor L₄ is coupled to the battery 30. The sub path 222 includes a first diode D₁. An anode of the first diode D₁ is coupled to an end, which is not commonly coupled to the upper switch Q₅, of the lower switch Q₆, and a cathode of the first diode D₁ is coupled to the DC power apparatus 40.

For the circuits shown in FIG. 4 and FIG. 5, when a voltage of the battery 30 is greater than a reference voltage value, the charging unit 22B operates in a boost mode to charge the battery 30, and when the voltage of the battery 30 is less than the reference voltage value, the charging unit 22B operates in a buck (step-down) mode to charge the battery 30. When the voltage of battery is equal to a reference voltage value, the charging unit 22A provide the same voltage to charge the battery. Moreover, according to the power required by the power-receiving apparatus 50, the charging unit 22B makes the battery 30 operate in a boost (step-up) mode or a buck (step-down) mode to discharge to the power-receiving apparatus 50. For the circuit shown in FIG. 6, the major difference between FIG. 4, FIG. 5 and FIG. 6 is that the charging unit 22B operates in the boost (step-up) mode or the buck (step-down) mode to charge the battery 30, but the battery 30 cannot discharge to the power-receiving apparatus 50.

Moreover, the battery 30 provides power required by the power-receiving apparatus 50 through the charger 22, or the power-receiving apparatus 50 charges the battery 30 through the charger 22. Moreover, according to the power required by the power-receiving apparatus 50, the charging unit 22B makes the battery 30 operate in a boost (step-up) mode or a buck (step-down) mode to discharge to the power-receiving apparatus 50.

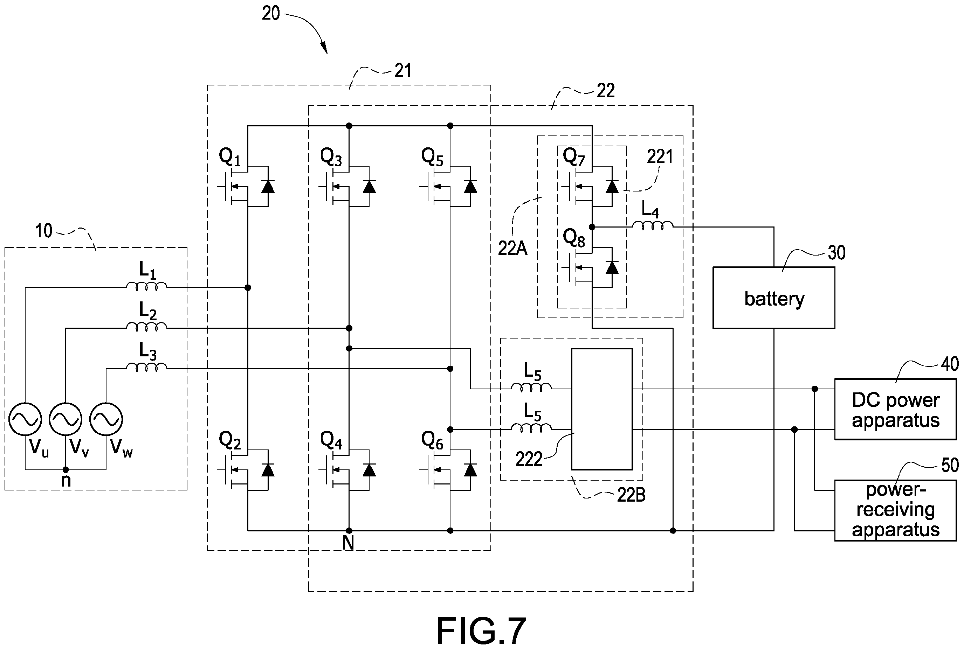

Please refer to FIG. 7, which shows a block circuit diagram of the power integration system with motor drive and battery charging and discharging function according to a second embodiment of the present disclosure. The front-end DC conversion path 22A includes a front-end bridge arm 221 and a first energy-storing inductor L₄. The front-end bridge arm 221 is coupled to the shared upper switch Q₅ and lower switch Q₆. The first energy-storing inductor L₄ is coupled to the front-end bridge arm 221. The charger 22 further includes a charging unit 22B. The charging unit 22B includes a plurality of second energy-storing inductors L₅ and a sub path 222. The second energy-storing inductors L₅ are correspondingly coupled to the shared upper switches Q₃, Qs and lower switches Q₄, Q₆. The sub path 222 is coupled to the second energy-storing inductors L₅. In particular, the inductance value of each second energy-storing inductor L₅ may be designed to be the same or different according to the actual requirements of the circuits.

For the circuit shown in FIG. 7, when a voltage of the battery 30 is greater than a reference voltage value, the charging unit 22B operates in a boost (step-up) mode to charge the battery 30, and when the voltage of the battery 30 is less than the reference voltage value, the charging unit 22B operates in a buck (step-down) mode to charge the battery 30.

Moreover, the battery 30 provides power required by the power-receiving apparatus 50 through the charger 22, or the power-receiving apparatus 50 charges the battery 30 through the charger 22. Moreover, according to the power required by the power-receiving apparatus 50, the charging unit 22B makes the battery 30 operate in a boost (step-up) mode or a buck (step-down) mode to discharge to the power-receiving apparatus 50.

Accordingly, the power integration system with motor drive and battery charging and discharging function is provided to realize the structure that the power switches of a three-phase motor driver are shared in the charger, which can reduce the number of external components, thereby reducing the size and achieving high efficiency.

## Claims

1. A power integration system with motor drive and battery charging and discharging, **characterized in that** the power integration system comprising:
a motor (10),
a power integration circuit (20), comprising:
an inverter (21), comprising multi-phase bridge arms, each bridge arm comprising an upper switch (Q₁, Q₃, Q₅) and a lower switch (Q₂, Q₄, Q₆), and each bridge correspondingly coupled to each phase winding of the motor (10), and
a charger (22), comprising a front-end DC conversion path (22A), and the upper switch (Q₁, Q₃, Q₅) and the lower switch (Q₂, Q₄, Q₆) of at least one bridge arm of the shared inverter (21), and
a battery (30), coupled to the power integration circuit (20),
wherein the power integration circuit (20) receives a DC power provided by a DC power apparatus (40), and the charger (22) converts the DC power to charge the battery (30), and the battery (30) provides power required to drive the motor (10) through the inverter (21).

2. The power integration system as claimed in claim 1, wherein the battery (30) provides power required by a power-receiving apparatus (50) through the charger (22), or the power-receiving apparatus (50) charges the battery (30) through the charger (22).

3. The power integration system as claimed in claim 1, wherein the front-end DC conversion path (22A) comprises:
a front-end bridge arm (221), coupled to the shared upper switch (Q₁, Q₃, Q₅) and lower switch (Q₂, Q₄, Q₆), and
a first energy-storing inductor (L₄), coupled to the front-end bridge arm (221),
wherein the charger (22) further comprises:
a charging unit (22B), comprising:
a second energy-storing inductor (L₅), coupled to the shared upper switch (Q₁, Q₃, Q₅) and lower switch (Q₂, Q₄, Q₆), and
a sub path (222), coupled to the second energy-storing inductor (L₅).

4. The power integration system as claimed in claim 3, wherein the front-end bridge arm (221) comprises:
a first switch (Q₇) and a second switch (Q₈), a common-connected node of the first switch (Q₇) and the second switch (Q₈) coupled to a first end of the first energy-storing inductor (L₄), and a second end of the first energy-storing inductor (L₄) coupled to the battery (30),
wherein the sub path (222) comprises a third switch (Q₉), a first end of the third switch (Q₉) coupled to an end, which is not commonly coupled to the upper switch (Q₁, Q₃, Q₅), of the lower switch (Q₂, Q₄, Q₆), and a second end of the third switch (Q₉) coupled to the DC power apparatus (40).

5. The power integration system as claimed in claim 3, wherein the front-end bridge arm (221) comprises:
a first switch (Q₇) and a second switch (Q₈), a common-connected node of the first switch (Q₇) and the second switch (Q₈) coupled to a first end of the first energy-storing inductor (L₄), and a second end of the first energy-storing inductor (L₄) coupled to the battery (30),
wherein the sub path (222) comprises a third switch (Q₉), a first end of the third switch (Q₉) coupled in series to the second energy-storing inductor (L₅), and a second end of the third switch (Q₉) coupled to the DC power apparatus (40).

6. The power integration system as claimed in claim 3, wherein the front-end bridge arm (221) comprises:
a first switch (Q₇) and a second switch (Q₈), a common-connected node of the first switch (Q₇) and the second switch (Q₈) coupled to a first end of the first energy-storing inductor (L₄), and a second end of the first energy-storing inductor (L₄) coupled to the battery (30),
wherein the sub path (222) comprises a first diode (Di), an anode of the first diode (Di) coupled to an end, which is not commonly coupled to the upper switch (Q₁, Q₃, Q₅), of the lower switch (Q₂, Q₄, Q₆), and a cathode of the first diode (Di) coupled to the DC power apparatus (40).

7. The power integration system as claimed in claim 3, wherein when a voltage of the battery (30) is greater than a reference voltage value, the charging unit (22B) operates in a boost mode to charge the battery (30), and when the voltage of the battery (30) is less than the reference voltage value, the charging unit (22B) operates in a buck mode to charge the battery (30).

8. The power integration system as claimed in claim 7, wherein the battery (30) provides power required by a power-receiving apparatus (50) through the charger (22), or the power-receiving apparatus (50) charges the battery (30) through the charger (22), and according to the power required by the power-receiving apparatus (50), the charging unit (22B) makes the battery (30) operate in a boost mode or a buck mode to discharge to the power-receiving apparatus (50).

9. The power integration system as claimed in claim 1, wherein the front-end DC conversion path (22A) comprises:
a front-end bridge arm (221), coupled to the shared upper switch (Q₁, Q₃, Q₅) and lower switch (Q₂, Q₄, Q₆), and
a first energy-storing inductor (L₄), coupled to the front-end bridge arm (221),
wherein the charger (22) further comprises:
a charging unit (22B), comprising:
a plurality of second energy-storing inductors (L₅), correspondingly coupled to the shared upper switches (Q₁, Q₃, Q₅) and lower switches (Q₂, Q₄, Q₆), and
a sub path (222), coupled to the second energy-storing inductors (L₅).

10. The power integration system as claimed in claim 9, wherein when a voltage of the battery (30) is greater than a reference voltage value, the charging unit (22B) operates in a boost mode to charge the battery (30), and when the voltage of the battery (30) is less than the reference voltage value, the charging unit (22B) operates in a buck mode to charge the battery (30).

11. The power integration system as claimed in claim 9, wherein the battery (30) provides power required by a power-receiving apparatus (50) through the charger (22), or the power-receiving apparatus (50) charges the battery (30) through the charger (22), and according to the power required by the power-receiving apparatus (50), the charging unit (22B) makes the battery (30) operate in a boost mode or a buck mode to discharge to the power-receiving apparatus (50).
